(19) Europäisches Patentamt
European Patent Office
Office européen des brevets

(11) Veröffentlichungsnummer: **0 175 205**
**B1**

(12) **EUROPÄISCHE PATENTSCHRIFT**

(45) Veröffentlichungstag der Patentschrift: **07.11.90**

(51) Int. Cl.$^5$: **C 08 G 63/18,** C 08 J 5/18

(21) Anmeldenummer: **85111082.5**

(22) Anmeldetag: **03.09.85**

(54) **Hochmolekulare Polyester, ihre Herstellung und Verwendung.**

(30) Priorität: **14.09.84 DE 3433756**

(43) Veröffentlichungstag der Anmeldung:
**26.03.86 Patentblatt 86/13**

(45) Bekanntmachung des Hinweises auf die Patenterteilung:
**07.11.90 Patentblatt 90/45**

(84) Benannte Vertragsstaaten:
**DE FR GB IT NL**

(56) Entgegenhaltungen:
**EP-A-0 050 821**
**EP-A-0 088 322**
**DE-A-2 802 978**
**FR-A-2 367 091**
**US-A-3 234 167**

**ENCYCLOPEDIA OF POLYMER SCIENCE AND TECHNOLOGY, Band 11, 1969, Seite 96, Interscience Publishers, New York, US;**

(73) Patentinhaber: **BAYER AG**
**D-5090 Leverkusen 1 Bayerwerk (DE)**

(72) Erfinder: **Serini, Volker, Dr.**
**Sebastian-Kneipp-Weg 2**
**D-4150 Krefeld (DE)**
Erfinder: **Schulte, Bernhard, Dr.**
**Doppelfeldstrasse 15**
**D-4150 Krefeld (DE)**
Erfinder: **Waldenrath, Werner**
**Maastrichter Strasse 40**
**D-5000 Köln 1 (DE)**
Erfinder: **Freitag, Dieter, Dr.**
**Hasenheide 10**
**D-4150 Krefeld 1 (DE)**
Erfinder: **Hucks, Uwe**
**Am Marienstift 30**
**D-4234 Alpen (DE)**
Erfinder: **Wank, Joachim**
**Zülpicher Strasse 7**
**D-4047 Dormagen 5 (DE)**
Erfinder: **Weber, Hans-Leo**
**Dahlienweg 7**
**D-4049 Rommerskirchen 2 (DE)**

**EP 0 175 205 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft hochmolekulare Polyester aus 2,2-Bis-(3,5-dimethyl-4-hydroxyphenyl)-propan (Tetramethylbisphenol A; TMBPA) und Terephthalsäure, ihre Herstellung durch phasentransferkatalysierte Polykondensation und ihre Verwendung zur Herstellung von Folien.

Aus der Deutschen Offenlegungsschrift 28 02 978 ist die Herstellung von thermoplastischen Polyestern aus TMBPA und Terephthalsäuredichlorid in einer 2-Phasenreaktion in Gegenwart eines Phasentransferkatalysators bekannt, wobei die beiden Phasen aus einem Halogenkohlenwasserstoff und wäßriger Alkalilösung bestehen. Die aus äquivalenten Mengen an TMBPA und Terephthalsäuredichlorid in Gegenwart eines Kettenbegrenzers hergestellten Polyester haben relative Viskositäten $\eta_{rel}$ von 1,18 bis 1,42 (gemessen bei 25°C in $CH_2Cl_2$, c = 5 g/l).

Die erzielten Viskositäten und die entsprechenden Molekulargewichte reichen für bestimmte Anwendungszwecke, beispielsweise hochtemperaturbeständige Folien, nicht aus.

Aufgabe der Erfindung ist es daher, Polyester bereitzustellen, aus denen hochtemperaturbeständige Folien hergestellt werden können.

Es wurde nun gefunden, daß dies mit Polyestern auf Basis TMBPA und Terephthalsäure gelingt, deren relative Viskositäten $\eta_{rel}$ 1,6 bis 4,5 (gemessen bei 25°C in $CH_2Cl_2$, c = 5 g/l) betragen.

Gegenstand der Erfindung sind daher Polyester mit wenigstens 90 Gew.-% vorzugsweise wenigstens 98 Gew.-% an wiederkehrenden Struktureinheiten der Formel

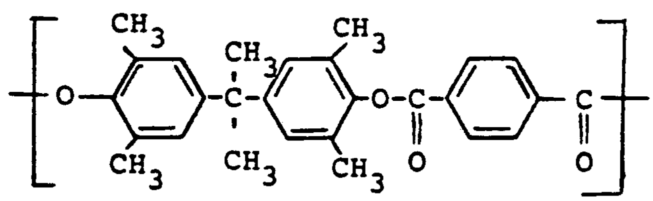

gekennzeichnet durch eine relative Viskosität $\eta_{rel}$ 1,6 bis 4,5 (gemessen bei 25°C in $CH_2Cl_2$, c = 5 g/l).

Ein weiterer Gegenstand der Erfindung ist ein Verfahren zur Herstellung dieser Polyester durch Umsetzung von TMBPA, das gegebenenfalls bis zu 10 Gew.-% andere Bisphenole enthält, mit Terephthalsäuredichlorid in einem 2-Phasengemisch aus flüssigem Halogenkohlenwasserstoff und wäßriger Alkalilösung in Gegenwart eines Phasentransferkatalysators und gegebenenfalls eines Kettenbegrenzers in einer Menge von 0,1 bis 3 Mol-%, bezogen auf TMBPA, dadurch gekennzeichnet, daß man TMBPA und Terephthalsäuredichlorid in molaren Verhältnissen von 1,0000:1,0025 bis 1,0000:1,0500 umsetzt oder, bei Verwendung äquimolarer Mengen an TMBPA und Terephthalsäuredichlorid, den Polyester einer Nachkondensation in Gegenwart von 0,1 bis 20 Mol-%, bezogen auf TMBPA, eines tertiären aliphatischen oder cycloaliphatischen Amins unterwirft oder beide Maßnahmen durchführt.

Bis zu 10 Gew.-% des Polyesters können aus Einheiten der Formel

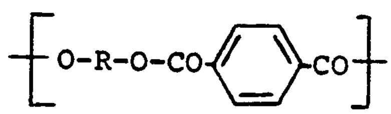

bestehen, wobei R einen aromatischen Rest bedeutet, der von dem Rest der Formel

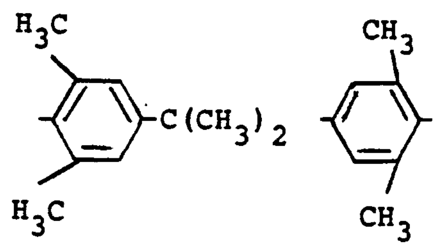

unterschiedlich ist, also den Rest eines anderen Diphenols bedeutet.

Diphenole der Formel HO—R—OH sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-äther, Bis-(hydroxyphenyl)-ketone, α,α-Bis-(hydroxyphenyl)-diisopropylbenzole sowie deren kernhalogenierte und kernalkylierte Derivate.

Der erfindungsgemäße Polyester eignet sich hervorragend zur Herstellung von Folien, die gute mechanische und elektrische Eigenschaften sowie sehr gute Transparenz, insbesondere aber hohe Wärmestandfestigkeit zeigen. Die Glasübergangstemperatur liegt in Abhängigkeit von der Viskosität zwischen 250 und 270°C. Die Folien sind lötbadfest bis zu Lötbadtemperaturen von 260°C.

Die Folien können in Stärken von 2 bis 200 µm hergestellt und anschließend bei 240 bis 340°C auf Stärken bis zu 0,5 µm verstreckt werden.

Der erfindungsgemäße Polyester zeichnet sich ferner durch sehr gute Hydrolysenbeständigkeit gegen Wasser und wäßriges Alkali aus. Er ist besonders arm an verseifbarem Chlor; im allgemeinen liegt der Gehalt an verseifbarem Chlor unter 20 ppm.

Für das Zweiphasengemisch verwendete flüssige Halogenkohlenwasserstoffe sind chlorierte aromatische oder aliphatische Kohlenwasserstoffe, wie Chlorbenzol, Dichlorbenzol, Chlortoluol, Trichlorethan, Chloroform oder Methylenchlorid. Bevorzugt werden die aliphatischen chlorierten Kohlenwasserstoffe. Besonders bevorzugt wird Methylenchlorid. Die Lösungen der erfindungsgemäßen Polyester in diesen Lösungsmitteln bleiben praktisch unbegrenzt stabil, das heißt, es bilden sich keine Trübungen, es tritt keine Gelbildung ein und es fallen keine kristallinen Anteile aus.

Das Verhältnis organisches Lösemittel zum eingesetzten Wasser kann bei dem erfindungsgemäßen Verfahren in relativ weiten Bereichen variiert werden. Bevorzugt werden Verhältnisse organisches Lösemittel/eingesetztes Wasser von 1/0,2 bis 1/5, besonders bevorzugt 1/0,8 bis 1/2, ganz besonders bevorzugt von 1/1 bis 1/1,5 Volumteile gewählt.

Die Lösungsmittelmenge wird so gewählt, daß die bei der Kondensation entstehende Polyesterlösung im allgemeinen 1 bis 30 Gew.-% Polyester, bevorzugt 2 bis 20 Gew.-% Polyester, besonders bevorzugt 3 bis 10 Gew.-% Polyester enthält.

Als Phasentransferkatalysatoren können quaternäre Ammoniumsalze, quaternäre Phosphoniumsalze und Kronenether eingesetzt werden, wie sie in der Literatur beschrieben werden. Bevorzugt werden quaternäre Ammoniumsalze. Besonders bevorzugt ist Tetra-n-butylammoniumbromid. Die Phasentransferkatalysatoren werden im allgemeinen in Mengen von 0,01 bis 10 Mol-%, bevorzugt von 0,05 bis 5 Mol-%, besonders bevorzugt von 0,1 bis 2 Mol-%, bezogen auf TMBPA, eingesetzt.

Die für die Nachkatalyse verwendeten tertiären aliphatischen und cycloaliphatischen Amine, sind beispielsweise Trimethylamin, Triethylamin, Tri-n-propylamin, Tri-n-butylamin, Triisobutylamin, Tri-2-ethylhexylamin, N,N-Dimethyl-ethylamin, N,N-Dimethylisopropylamin, N,N-Diethylisopropylamin, N,N-Dimethyl-2-ethylhexylamin, N-Isobutyldi-(2-ethylhexyl)-amin, N-Methylditridecylamin, N,N-Dimethylcyclohexylamin, 1,4-Dimethylpiperazin, N,N,N',N'-Tetramethylethylendiamin, N-Methylpiperidin, N-Ethylpiperidin, Permethyldiethylentriamin, 4-Methylmorpholin und 1,2-Diazobicyclo-(2,2,2)-octan.

Bevorzugt sind Triethylamin, Tri-n-propylamin, Tri-iso- und -n-butylamin und N-Ethylpiperidin, besonders bevorzugt Triethylamin und N-Ethylpiperidin. Die Amine werden bevorzugt in Mengen von 0,5 bis 12 Mol-%, bezogen auf TMBPA, eingesetzt.

Als Kettenbegrenzer werden monofunktionelle Verbindungen, wie sekundäre Amine, aromatische Säurechloride und Phenole eingesetzt. Bevorzugt sind Phenole, z.B. Phenol, o-, m-, p-Kresol, 2,6-Dimethylphenol, p-tertiär-Butylphenol und Isooctylphenol. Die Menge beträgt bevorzugt 0,2 bis 1,5 Mol-%, besonders bevorzugt 0,4 bis 1 Mol-%, bezogen auf TMBPA.

Die relative Viskosität $\eta_{rel}$ beträgt bevorzugt 1,75 bis 3,0, besonders bevorzugt 2,0 bis 2,7. Das Molverhältnis Diphenol/Terephthalsäure-dichlorid beträgt bevorzugt 1,0000/1,0050 bis 1,0000/1,0300. Zu beachten ist, daß die den Kettenbegrenzern genau stöchiometrische Menge an Reaktionspartnern zusätzlich zugegeben wird, so z.B. bei Zugabe von 0,6 Mol-% Phenol (monofunktionell) 0,3 Mol-% Terephthalsäuredichlorid (difunktionell).

Die aus den erfindungsgemäßen Polyestern herstellbaren Folien sind insbesondere als Elektroisolierfolien, z.B. für die Herstellung von Kondensatoren und Leiterbahnen besonders geeignet. Sie lassen sich jedoch auch mit Vorteil als Bratfolien und für viele andere Zwecke einsetzen, wo es insbesondere auf hohe Wärmestandfestigkeit, Hydrolysefestigkeit, Transparenz, gute mechanische Eigenschaften, gute elektrische Eigenschaften und geringe Korrosivität ankommt.

Die Folien werden durch Gießen einer $CH_2Cl_2$-Lösung des erfindungsgemäßen Polyesters erhalten. Dazu kann die nach der Herstellung des Polyesters anfallende Polymerlösung in $CH_2Cl_2$ verwendet werden, wenn sie von der wäßrigen Phase abgetrennt, mit Wasser elektrolytfrei gewaschen, durch teilweise Abdestillation des Methylenchlorids getrocknet und schließlich durch Eindampfen auf die gewünschte Konzentration eingestellt wird.

Insbesondere werden 2 bis 20 gew.-%ige, vorzugsweise 5 bis 15 gew.-%ige Lösungen zur Folienherstellung verwendet.

Das Vergießen der $CH_2Cl_2$-Polyesterlösung findet auf temperierten Trommelwalzen statt, die matt oder poliert sein können und die im allgemeinen Temperaturen von 10—40°C aufweisen. Die Abdampfung des $CH_2Cl_2$ erfolgt größtenteils auf der Trommelwalze; Restlösungsmittel wird dann über weitere temperierte Walzen, im Umlufttrockner mit Hilfe von Heizflächen, wie IR-Strahleranordungen, oder anderen Heizanordnungen auch bei höheren Temperaturen, z.B. von 80—150°C, entfernt. Restspuren Lösemittel können durch weiteres Tempern, gegebenenfalls bei noch höherer Temperatur entfernt werden. Die Foliengießgeschwindigkeiten können variiert werden und liegen im allgemeinen bei Trommwalzen von 1—5 m Durchmesser bei 10—1000 m/Std.

Neben der sehr guten Wärmestandfestigkeit weisen die Folien eine geringe Wasseraufnahme auf. So zeigen sie z.B. nach 24 Stunden Lagerung bei 23°C/50% rel. Feuchte einen Wassergehalt von 0,22 Gew.-%

und nach 95 Studen einen von 0,25 Gew.-% auf. Dies ist beispielsweise für Lötbadanwendungen wichtig, bei denen zu große Restfeuchte von Folien zum Aufblähen der Folie führen kann. Die erfindungsgemäßen Folien brauchen für diesen Zweck, wenn überhaupt, dann nur kurz getrocknet zu werden.

Von Vorteil ist auch die geringe Energieaufnahme der Folien bei Bestrahlung mit Mikrowellen. Weiterhin sind ihre mechanischen Eigenschaften, wie z.B. Reißdehnung, Reißfestigkeit und E-Modul hervorragend. So wird beispielsweise an einer 100 µm dicken getrockneten Folie aus dem Polyester der relativen Viskosität von nur 1,75 noch eine Reißdehnung von 40% gemessen. Bei höherer Viskosität des Polyesters erhält man noch höhere Reißdehnungen. Erwähnenswert sind insbesondere auch die gute Transparenz und die guten elektrischen Eigenschaften der Folien. Insbesondere interessant sind auch die Temperaturkonstanz und die hohe Frequenzunabhängigkeit der hervorragenden elektrischen Eigenschaften der Folien. Weiterhin von Vorteil ist die geringe Spannungsrißanfälligkeit und die Beständigkeit gegenüber Fetten. Wichtig für viele Anwendungen ist auch die gute Isotropie der Folien, auch nach Schrumpfvorgängen, wie z.B. aus dem längs und quer zur Gießrichtung gemessenen Ausdehnungskoëffizienten hervorgeht. Von Bedeutung ist auch die gute Verklebbarkeit der Folien mit Lösungsmitteln und mit Klebern.

Beispiel 1

8 kg $H_2O$ und 193 g 50 Gew.-%ige Natronlauge werden vorgelegt. Unter $N_2$-Durchleiten werden 284,4 g (1 Mol) TMBPA, 20 g $CH_2Cl_2$ und 3,2 g (0,01 Mol) Tetrabutylammoniumbromid zugegeben. Nach dem Lösen des TMBPA und des Tetrabutylammoniumbromids wird $N_2$ nur noch übergeleitet. Nach Zugabe von 6,7 kg $CH_2Cl_2$ wird unter Rühren eine Lösung von 205,1 g (1,0l Mol) Terephthalsäuredichlorid in 812 g $CH_2Cl_2$ innerhalb von 5 Minuten gleichmäßig zudosiert. Es wird dann noch 1 Stunde nachgerührt. Die organische Phase wird dann abgetrennt, mit $CH_2Cl_2$ verdünnt, mit verdünnter $H_3PO_4$ angesäuert und mit $H_2O$ elektrolytfrei gewaschen. Die Lösung wird dann eingedampft, der erhaltene Polyester getrocknet. Der getrocknete Polyester zeigt eine relative Viskosität $\eta_{rel}$ = 2,607, gemessen bei 25°C in $CH_2Cl_2$, c = 5 g/l.

Beispiel 2

Die Durchführung erfolgt wie in Beispiel 1, jedoch werden nach der Nachrührzeit von 1 Stunde 1,1 g (0,01 Mol) N-Ethylpiperidin zugegeben und noch 1 Stunde länger nachgerührt. Es wird ein Polyester mit einer relativen Viskosität von $\eta_{rel}$ = 3,802 erhalten.

Beispiel 3

Die Durchführung erfolgt wie in Beispiel 2, jedoch werden nach der Zugabe von TMBPA noch 0,80 g (0,0085 Mol) Phenol zugegeben und die Terephthalsäuredichloridmenge auf 205,9 g (1,0143 Mol) erhöht. Es wird ein Polyester mit einer relativen Viskosität von $\eta_{rel}$ = 2,361 erhalten. Bei vierfacher Wiederholung des Ansatzes werden folgende relativen Viskositäten der hergestellten Polyester erhalten: 2,368; 2,342; 2,365; 2,385.

Beispiel 4

Die Durchführung erfolgt wie in Beispiel 2, jedoch werden 203,0 g (1,0 Mol) Terephthalsäuredichlorid eingesetzt. Der so hergestellte Polyester hat eine relative Viskosität $\eta_{rel}$ = 2,553.

Beispiel 5

Die nach Beispiel 3 erhaltene elektrolyt- und wasserfreie Polyesterlösung wird auf eine Konzentration von 10,5 Gew.-% an Polyester durch Abdampfen von $CH_2Cl_2$ eingestellt. Das Abdestillieren des $CH_2Cl_2$ bei Normaldruck in einem Rührkessel wird wegen der hochviskosen Lösung sehr langsam vorgenommen und dauert ca. 48 Stunden. Die transparente Lösung enthält keine Gelteilchen und keine kristallisierten Polyesteranteile. Sie verändert sich auch bei 2-monatigem Stehen nicht.

Aus der erhaltenen 10,5 gew.-%igen Esterlösung werden nach 2 Monaten Standzeit über einen Schlitz auf einer auf 35°C temperierten Trommelwalze von 4 m Durchmesser Folien gegossen, die in einem Umlufttrockenschrank kontinuierlich bei 130°C nachgetrocknet werden. Sowohl eine 100 µm als auch eine 6 µm dicke Folie läßt sich durch Verstellen der Schlitzstärke herstellen. Die Folien sind lochfrei, gleichmäßig in der Dicke und transparent.

Die 100 µm dicke Folie zeigt folgende Eigenschaften:

| | | |
|---|---|---|
| Wasseraufnahme aus Luft (23°C/50% Feuchte) | 24 h<br>16 h | 0,22%<br>0,25% |
| Glastemperatur Tg nach Differentialthermoanalyse | | 268°C |
| linearer Ausdehnungscoeffizient längs<br>quer | | $66 x 10^{-6} K^{-1}$<br>$69 x 10^{-6} K^{-1}$ |
| Zugversuch Reißdehnung $\varepsilon_R$<br>Reißfestigkeit $\sigma_R$ | | 68%<br>78 MPa |
| Dielektrizitätszahl $\varepsilon_R$ bei $10^3$ Hz und 20—150°C | | 3,0 temperaturunabhängig |
| Dielektrizitätszahl $\varepsilon_R$ bei 50—$10^6$ Hz und 23°C | | 3,0 fast frequenzunabhängig |
| spez. Durchgangswiderstand $\rho_D$ | 23°C<br>150°C | $1 x 10^{17}$cm<br>$4 x 10^{15}$cm |
| Schrumpf bei Temperung 260°C | | 23% |
| Verhalten im Lötbad 260°C nach Schrumpfung bei 260°C | | unter 0,5% Schrumpf, kein Verzug, keine Trübung, keine Verfärbung, keine Blasenbildung (= lötbadfest) |
| Verhalten bei Cu-Kaschierung für Leiterbahnanwendung mit Ätzung der Cu-Kaschierung zu Leitern | | Haftung gut (insbesondere nach Coronabehandlung der Folie) Ätzbarkeit gut (keine Veränderung der Folie). |

Die 6 µm dicke Folie wird auf einem beheizten Walzenstuhl bei ca. 300°C Heizmitteltemperatur im Verhältnis 1:3 gereckt. Foliendicke nach Reckung 2 µm, Folie gleichmäßig dick. Die Folie läßt sich gut metallisieren und zu Kondensatoren verarbeiten, die hervorragende Eigenschaften zeigen. Der im Lötbad auftretende Schrumpf der gereckten Folie ist bei den Kondensatoren erwünscht, die Folie wird nicht durch Lochbildung oder ähnliche Schäden zerstört.

### Beispiel 6

Beispiel 2 wird mit der gleichen Menge eines rohen, 95 gew.-%igen TMBPA gemäß Beispiel 1 der DE—OS 2 928 464 wiederholt. Der Polyester hat eine relative Viskosität $\eta_{rel} = 2{,}935$.

### Beispiel 7

Beispiel 2 wird mit der gleichen Menge eines rohen, 93,8 gew.-%igen TMBPA, das analog Beispiel 1 der DE—OS 2 928 443 aus technischem, 96,7 gew.-%igem 2,6-Dimethylphenol hergestellt wurde und 6,1 Gew.-% unbekannte Komponenten und weniger als 0,1 Gew.-% 2,6-Dimethylphenol und Kresole enthielt, wiederholt.

Der Polyester hat eine relative Viskosität $\eta_{rel} = 2{,}883$.

**Patentansprüche**

1. Polyester mit wenigstens 90 Gew.-% an wiederkehrenden Struktureinheiten der Formel

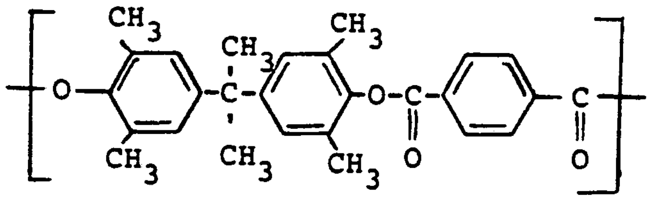

gekennzeichnet durch eine relative Viskosität $\eta_{rel}$ 1,6 bis 4,5 (gemessen bei 25°C in $CH_2Cl_2$, c = 5 g/l).

2. Verfahren zur Herstellung von Polyestern gemäß Anspruch 1 durch Umsetzung von 2,2-Bis-(3,5-dimethyl-4-hydroxyphenyl)-propan (TMBPA), das gegebenenfalls bis zu 10 Gew.-% andere Bisphenole enthält, mit Terephthalsäuredichlorid in einem 2-Phasengemisch aus flüssigem Halogenkohlenwasserstoff und wäßriger Alkalilösung in Gegenwart eines Phasentransferkatalysators und gegebenenfalls eines Kettenbegrenzers in einer Menge von 0,1 bis 3 Mol-%, bezogen auf TMBPA, dadurch gekennzeichnet, daß man TMBPA und Terephthalsäuredichlorid in molaren Verhältnissen von 1,0000:1,0025 bis 1,0000:1,0500 umsetzt oder, bei Verwendung äquimolarer Mengen an TMBPA und Terephthalsäuredichlorid, den Polyester einer Nachkondensation in Gegenwart von 0,1 bis 20 Mol-%, bezogen auf TMBPA, eines tertiären aliphatischen oder cycloaliphatischen Amins unterwirft oder beide Maßnahmen durchführt.

3. Verwendung der Polyester gemäß Anspruch 1 zur Herstellung von Folien.

**Revendications**

1. Polyesters contenant au moins 90% en poids de motifs de structure répétés de formule:

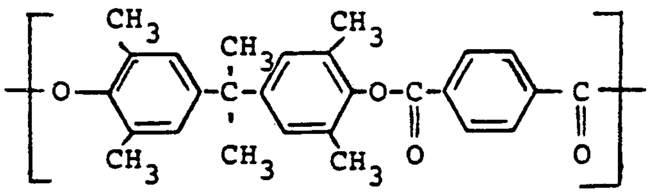

et qui se caractérisent par une viscosité relative $\eta_{rel}$ de 1,6 à 4,5 (mesure à 25°C dans $CH_2Cl_2$, c = 5 g/l).

2. Procédé de préparation des polyesters de la revendication 1 par réaction du 2,2-bis-(3,5-diméthyl-4-hydroxyphényl)-propane (TMBPA), contenant, le cas échéant, jusqu'à 10% en poids d'autres bisphénols, avec le dichlorure de l'acide téréphtalique dans un mélange à deux phases consistant en un hydrocarbure halogéné liquide et une solution aqueuse d'un alcali en présence d'un catalyseur à transfert de phase et, le cas échéant, d'un limitateur de chaîne en quantité de 0,1 à 3 mol% par rapport au TMBPA, caractérisé en ce que l'on fait réagir le TMBPA et le dichlorure de l'acide téréphtalique à des rapports molaires de 1,0000:1,0025 à 1,0000:1,0500 ou bien, lorsqu'on utilise des quantités équimoléculaires de TMBPA et de dichlorure de l'acide téréphtalique, en ce que l'on soumet le polyester à une condensation complémentaire en présence de 0,1 à 20 mol%, par rapport au TMBPA, d'une amine aliphatique ou cycloaliphatique tertiaire, ou bien en ce que l'on procède aux deux opérations.

3. Utilisation des polyesters de la revendication 1 pour la fabrication de feuilles.

**Claims**

1. Polyesters containing at least 90% by weight recurring structural units corresponding to the following formula

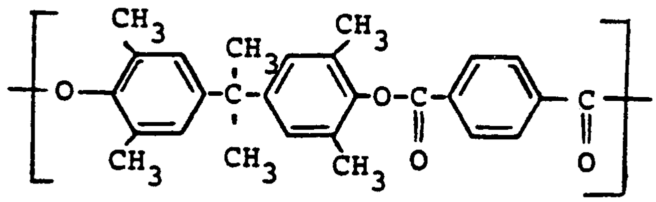

characterized by a relative viscosity $\eta_{rel}$ of 1.6 to 4.5 (as measured at 25°C in $CH_2Cl_2$, c = 5 g/l).

2. A process for the production of the polyesters claimed in claim 1 by reaction of 2,2-bis-(3,5-dimethyl-4-hydroxyphenyl)-propane (TMBPA) optionally containing up to 10% by weight other bisphenols with terephthalic acid dichloride in a two-phase mixture of liquid halogenated hydrocarbon and aqueous alkali solution in the presence of a phase transfer catalyst and, optionally, a chain terminator in a quantity of 0.1 to 3 mol-%, based on TMBPA, characterized in that TMBPA and terephthalic acid dichloride are reacted in molar ratios of 1.0000:1.0025 to 1.0000:1.0500 or where equimolar quantities of TMBPA and terephthalic acid dichloride are used, the polyester is subjected to post-condensation in the presence of 0.1 to 20 mol-%, based on TMBPA, of a tertiary aliphatic or cycloaliphatic amine or both measures are carried out.

3. The use of the polyesters claimed in claim 1 for the production of films.